# EUROPÄISCHE PATENTSCHRIFT

(11) **EP 2 282 023 B1**
(45) Veröffentlichungstag und Bekanntmachung des Hinweises auf die Patenterteilung: **06.05.2015**
(21) Anmeldenummer: 10162973.1
(22) Anmeldetag: 17.05.2010
(51) Int. Cl.: F01N 1/06, F01N 1/02, F16L 55/033

(54) **Abgasanlage mit aktivem Schalldämpfer**
Exhaust system with active silencer
Système d'échappement avec silencieux actif

(30) Priorität: 03.07.2009 DE 102009031848
(43) Veröffentlichungstag der Anmeldung: 09.02.2011
(73) Patentinhaber: Eberspächer Exhaust Technology GmbH & Co. KG, 66539 Neunkirchen (DE)
(72) Erfinder: Krüger, Jan, 73765 Neuhausen (DE); Nicolai, Manfred, 73730 Esslingen (DE)
(74) Vertreter: BRP Renaud & Partner mbB Rechtsanwälte Patentanwälte Steuerberater

(56) Entgegenhaltungen:
- DE-A1- 4 317 403
- JP-A- 2000 130 145
- US-A- 5 600 106

## Beschreibung

Die vorliegende Erfindung betrifft eine Abgasanlage für eine Brennkraftmaschine, insbesondere eines Kraftfahrzeugs, mit den Merkmalen des Oberbegriffs des Anspruchs 1. Die Erfindung betrifft außerdem ein Fahrzeug, insbesondere einen Personenkraftwagen, mit einer Brennkraftmaschine und mit einer derartigen Abgasanlage.

Eine Abgasanlage umfasst üblicherweise ein Abgasrohr, das im Betrieb der Brennkraftmaschine einen Abgasstrom von der Brennkraftmaschine wegführt. In dieses Abgasrohr können Abgasbehandlungseinrichtungen, wie z. B. Partikelfilter, Schalldämpfer und Katalysatoren, eingebunden sein. Bei Schalldämpfern kommen vorwiegend passive Schalldämpfer zur Anwendung, die bspw. mittels Resonanz, Absorption, Interferenz und Reflexion arbeiten, um den im Abgasrohr transportierten Luftschall zu dämpfen. Im Unterschied dazu arbeiten aktive Schalldämpfer mit mindestens einem Lautsprecher, um gezielt Gegenschall zu erzeugen. Hierdurch kommt es zu einer mehr oder weniger effektiven Auslöschung des zu bedämpfenden Schalls.

Eine Vielzahl von Kraftfahrzeugen, insbesondere Personenkraftwagen, besitzen einen Frontmotor, also eine Brennkraftmaschine, die in einem frontseitigen Motorraum des Fahrzeugs untergebracht ist. Um die für Personenkraftwagen vorgeschriebenen Lärmschutzbestimmungen einhalten zu können, braucht eine Abgasanlage, die mit passiven Schalldämpfern arbeitet, eine vergleichsweise große akustische Länge. Dementsprechend erstrecken sich herkömmliche Abgasanlagen von der frontseitig angeordneten Brennkraftmaschine bis zum Fahrzeugheck, wo sich ein Endrohr der Abgasanlage befindet. Abgasanlagen für Fahrzeuge mit Frontmotor, bei denen das Endrohr seitlich zwischen einer Vorderachse und einer Hinterachse des Fahrzeugs angeordnet ist, sog. "Side-Pipes", arbeiten mit großvolumigen Schalldämpfern, um innerhalb des Schalldämpfers z. B. durch Mehrfachumlenkung die zuvor genannte, große akustische Länge zu realisieren. Ebenso arbeiten Abgasanlagen von Fahrzeugen mit Heckmotor mit relativ großvolumigen Schalldämpfern.

Um bei Kraftfahrzeugen den Energieverbrauch und die Schadstoffemissionen zu reduzieren, besteht der Wunsch, das Fahrzeug leichter zu bauen. Dementsprechend gibt es auch Überlegungen, anstelle der großvolumigen passiven Schalldämpfer, aktive Schalldämpfer einzusetzen, die ein deutlich reduziertes Volumen sowie ein deutlich reduziertes Gewicht besitzen. Problematisch ist dabei jedoch der Umstand, dass die in den aktiven Schalldämpfern verwendeten Lautsprecher nur eine vergleichsweise geringe Hitzebeständigkeit besitzen, die jedenfalls unterhalb der üblichen Abgastemperaturen liegt. Grundsätzlich können aktive Schalldämpfer bei Fahrzeugen mit Frontmotor im Heckbereich an die Abgasanlage, also quasi als Nachschalldämpfer angeschlossen werden, da sich die Abgase bis zum Ende derartiger langer Abgasanlagen in der Regel bereits hinreichend weit abgekühlt sind. Eine zur Gewichtseinsparung durchgeführte Verkürzung der Abgasanlage würde eine Positionierung des aktiven Schalldämpfers relativ nahe an der Brennkraftmaschine zur Folge haben. In Motornähe sind die Abgase jedoch besonders heiß, was die Gefahr einer Beschädigung des aktiven Schalldämpfers erhöht.

Eine gattungsgemäße Abgasanlage ist aus der DE 43 17 403 A1 bekannt. Sie umfasst ein Abgasrohr, das im Betrieb der Brennkraftmaschine einen Abgasstrom von der Brennkraftmaschine wegführt, und einen aktiven Schalldämpfer, dessen Gehäuse über ein Verbindungsrohr an das Abgasrohr akustisch angeschlossen ist, wobei das Verbindungsrohr gekühlt ist. Diese Kühlung erfolgt bei der bekannten Abgasanlage passiv mittels außen am Verbindungsrohr angebrachter Kühlrippen.

Aus der US 5 600 106 ist es bekannt, in einem Gehäuse eines aktiven Schalldämpfers, durch das ein Abgasrohr hindurchgeführt ist, einen Lautsprecher mittels eines Kühlmittels aktiv und direkt zu kühlen, das z.B. von einem Kühlkreis zum Kühlen einer Brennkraftmaschine stammt, die mit der Abgasanlage ausgestattet ist.

Die JP 2000-130145 A zeigt eine Abgasanlage mit aktivem Schalldämpfer, bei der Umgebungsluft zur aktiven Kühlung des Lautsprechers in das Verbindungsrohr eingeblasen wird.

Die vorliegende Erfindung beschäftigt sich mit dem Problem, für eine Abgasanlage bzw. für ein damit ausgestattetes Kraftfahrzeug, eine verbesserte Ausführungsform anzugeben, die sich insbesondere dadurch auszeichnet, dass die Gefahr einer thermischen Beschädigung des aktiven Schalldämpfers reduziert ist. Hierdurch soll insbesondere die Möglichkeit einer motornahen Positionierung des aktiven Schalldämpfers eröffnet werden. Außerdem soll eine besonders leicht zu bauende Abgasanlage realisierbar sein.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein Verbindungsrohr zu verwenden, über das der aktive Schalldämpfer akustisch an das Abgas führende Abgasrohr angeschlossen ist. Ferner soll dieses Verbindungsrohr gekühlt sein. Die Verwendung eines derartigen Verbindungsrohres verhindert eine direkte Beaufschlagung des aktiven Schalldämpfers mit der im Abgasrohr geführten Abgasströmung, wodurch auch die thermische Belastung des Schalldämpfers signifikant reduziert ist. In diesem Verbindungsrohr bewegt sich das Abgas im Wesentlichen nur aufgrund der Druckpulsationen des im Abgas transportierten Schalls. In einem Anschlussbereich, in dem das Verbindungsrohr an das Abgasrohr angeschlossen ist, kann es außerdem zu Verwirbelungen und dergleichen kommen, die eine geringfügige, jedoch nicht zum Schalldämpfer hin gerichtete Abgasbewegung erzeugen. Das im Verbindungsrohr "stehende" Gasvolumen wirkt dabei wie eine thermische Isolierung. Die Kühlung des Verbindungsrohrs, die aktiv oder passiv oder sowohl aktiv als auch passiv erfolgen kann, führt zu einer weiteren signifikanten Reduzierung eines Wärmeübergangs vom Abgasrohr zum Schalldämpfer. Durch die Kühlung des Verbindungsrohrs bildet das Verbindungsrohr eine Wärmesenke, die eine Wärmeübertragung vom Abgasrohr zum Schalldämpfer über das Verbindungsrohr effektiv verhindert oder zumindest deutlich reduziert. Die vorgeschlagenen Maßnahmen reduzieren somit die thermische Belastung des aktiven Schalldämpfers bzw. der darin angeordneten, thermisch empfindlichen Komponenten, wie z. B. Lautsprecher und Lautsprecherantrieb sowie ggf. Lautsprechersteuerung. Hierdurch ist es insbesondere möglich, den aktiven Schalldämpfer über das gekühlte Verbindungsrohr mit einem vergleichsweise geringen Abstand zur Brennkraftmaschine an das Abgasrohr anzuschließen. Dies eröffnet außerdem die Möglichkeit, die Abgasanlage stromab des aktiven Schalldämpfers signifikant zu verkürzen, wodurch sich eine nennenswerte Gewichtseinsparung realisieren lässt.

Entsprechend einer vorteilhaften Ausführungsform kann das Verbindungsrohr an seiner Außenseite Kühlrippen aufweisen. Derartige Kühlrippen vergrößern die zur Wärmeabstrahlung zur Verfügung stehende Oberfläche des Verbindungsrohrs, was die Kühlung des Verbindungsrohrs aufgrund der Temperaturdifferenz zur Umgebung verbessert. Zusätzlich oder alternativ kann das Verbindungsrohr an seiner Innenseite Kühlrippen und/oder Turbulatoren aufweisen. Hierdurch wird der Wärmeübergang vom Abgas, das sich innerhalb des Verbindungsrohrs befindet, zum Verbindungsrohr verbessert, wodurch die thermisch isolierende Wirkung des vom Verbindungsrohr umschlossenen Abgasvolumens verbessert wird. Des Weiteren ist es grundsätzlich möglich, das Verbindungsrohr aus einem Material herzustellen, das eine besonders hohe thermische Leitfähigkeit besitzt, wie z. B. Aluminium oder Kupfer oder entsprechende AI- bzw. Cu-Legierungen.

Zweckmäßig kann das Verbindungsrohr an bzw. im Fahrzeug so angeordnet werden, dass es bei einem Betrieb des Fahrzeugs einer Luftströmung ausgesetzt ist. Durch eine solche Luftströmung wird die Wärmeabgabe an der Außenseite des Verbindungsrohrs an die Umgebung bzw. an die Luftströmung verbessert. Die Kühlwirkung des Verbindungsrohrs wird dadurch ebenfalls verbessert. Eine derartige Luftströmung kann bspw. durch den Fahrbetrieb des Fahrzeugs entstehen, sog. Fahrtwind. Bspw. kann das Verbindungsrohr hierzu an einer dem Fahrtwind ausgesetzten Stelle, z. B. im Bereich eines Unterbodens des Fahrzeugs, angeordnet sein. Ebenso ist es mit Hilfe entsprechender Strömungsleitmittel möglich, den Fahrtwind bis zu dem Verbindungsrohr zu leiten, um die gewünschte Luftströmung zur Beaufschlagung des Verbindungsrohrs zu erzeugen. Zusätzlich oder alternativ zu diesen passiven Maßnahmen zur Kühlung des Verbindungsrohrs ist es ebenso möglich, mit Hilfe eines Gebläses, einen solchen Luftstrom zur Beaufschlagung des Verbindungsrohrs zu erzeugen. Gebläse kommen bei Fahrzeugen, insbesondere bei Luft-Flüssigkeit-Wärmetauschern, sog. Kühler, zum Einsatz. Zum Kühlen des Verbindungsrohrs ist es nun möglich, ein mit Hilfe eines derartigen, ohnehin vorhandenen Gebläses erzeugten Luftstrom zumindest teilweise so abzulenken bzw. das Verbindungsrohr so zu positionieren, dass die gewünschte Luftstrombeaufschlagung des Verbindungsrohrs erfolgt. Alternativ ist es ebenso möglich, zur Erzeugung der kühlenden Luftströmung für das Verbindungsrohr ein eigenes Gebläse vorzusehen. Erfindungsgemäß ist das Verbindungsrohr mit einem Kühlkreis wärmeübertragend gekoppelt, in dem ein Kühlmittel zirkuliert. Bevorzugt werden dabei flüssige Kühlmittel, wodurch ein intensiver Wärmeübergang realisierbar ist.

Um die wärmeübertragende Kopplung zwischen Verbindungsrohr und Kühlkreis zu intensivieren, ist das Verbindungsrohr erfindungsgemäß entweder als Wärmetauscher ausgestaltet oder in einen Wärmetauscher integriert, der einen Gaspfad mit einem Flüssigkeitspfad mediengetrennt und wärmeübertragend koppelt und dessen Gaspfad das Gehäuse des Schalldämpfers mit dem Abgasrohr akustisch verbindet und dessen Flüssigkeitspfad in den Kühlkreis eingebunden ist.

Zweckmäßig kann die für das Verbindungsrohr vorgesehene Kühlung, z. B. mittels Luftstrom und/oder Kühlkreis, zusätzlich auch zur Kühlung eines Gehäuses des Schalldämpfers genutzt werden, wodurch der Schutz der darin angeordneten Komponenten vor Überhitzung verbessert ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung eines Kraftfahrzeugs,
- Fig. 2: eine perspektivische Ansicht einer Abgasanlage im Bereich eines aktiven Schalldämpfers,
- Fig. 3: eine stark vereinfachte Prinzipdarstellung der Abgasanlage im Bereich des aktiven Schalldämpfers,
- Fig. 4: einen Querschnitt durch ein Verbindungsrohr bei einer speziellen Ausführungsform,
- Fig. 5: eine perspektivische Ansicht eines Verbindungsrohrs im Längsschnitt bei einer weiteren Ausführungsform.

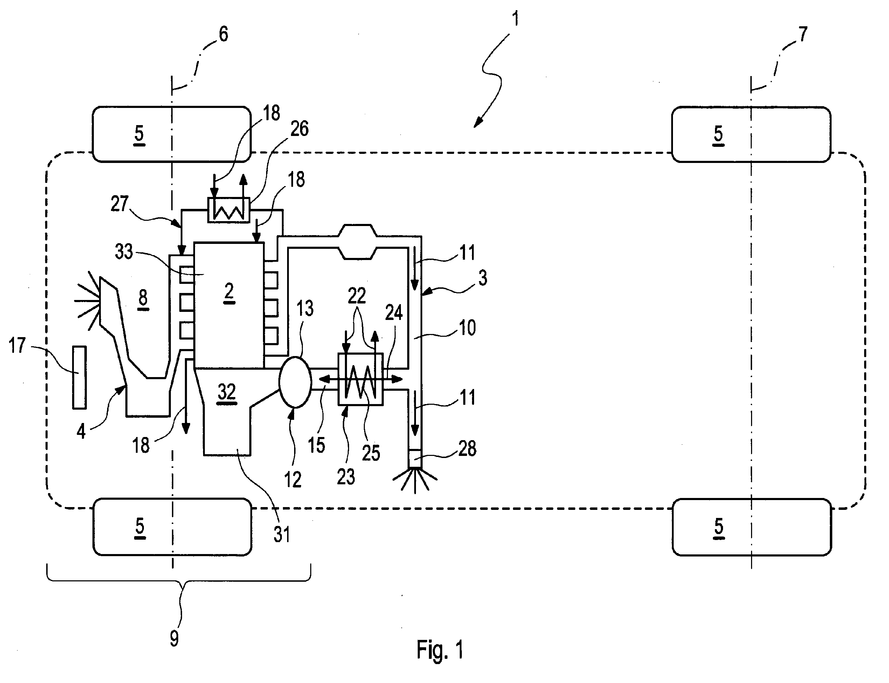

Entsprechend Fig. 1 umfasst ein Kraftfahrzeug 1, bei dem es sich bevorzugt um einen Personenkraftwagen handelt, eine Brennkraftmaschine 2 sowie eine Abgasanlage 3 zum Abführen von Abgasen von der Brennkraftmaschine 2, die im Betrieb der Brennkraftmaschine 2 von dieser erzeugt werden. Ferner sind in Fig. 1 eine Frischluftanlage 4 zur Versorgung der Brennkraftmaschine 2 mit Frischluft sowie Fahrzeugräder 5 angedeutet. Eine erste strichpunktierte Linie deutet eine Vorderachse 6 an, um welche die in Fig. 1 links dargestellten Vorderräder 5 des Fahrzeugs 1 rotieren. Eine zweite strichpunktierte Linie deutet eine Hinterachse 7 an, um welche die in Fig. 1 rechts dargestellten Hinterräder 5 des Fahrzeugs 1 rotieren. Die Brennkraftmaschine 2 ist am Fahrzeug 1 in einem Motorraum 8 angeordnet, der im Fahrzeug 1 frontseitig, also in einem Frontbereich 9 des Fahrzeugs 1 angeordnet ist. Das Fahrzeug 1 ist somit mit einem Frontmotor ausgestattet.

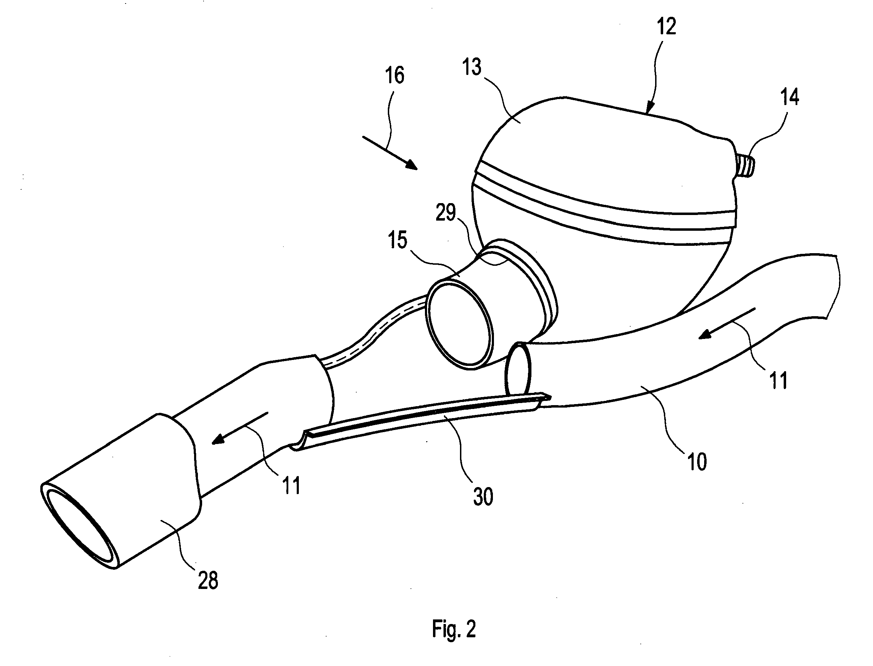

Die Abgasanlage 3 weist entsprechend den Figuren 1 bis 3 zumindest ein Abgasrohr 10 auf. Dieses führt im Betrieb der Brennkraftmaschine 2 einen durch Pfeile angedeuteten Abgasstrom 11 von der Brennkraftmaschine 2 weg. Ferner ist die Abgasanlage 3 mit wenigstens einem aktiven Schalldämpfer 12 ausgestattet. Dieser enthält in einem Gehäuse 13 aktive Komponenten, die hier nicht dargestellt sind und die vor einer Überhitzung zu schützen sind. Bei diesen Komponenten handelt es sich bspw. um einen Lautsprecher, um einen Lautsprechertreiber oder Lautsprecherantrieb sowie ggf. um eine Steuerung oder Steuerschaltung und/oder Leistungsschaltung. Ein elektrischer Anschluss für die elektrischen Komponenten des Schalldämpfers 12 ist in Fig. 2 mit 14 bezeichnet. Das Gehäuse 13 des Schalldämpfers 12 ist über ein Verbindungsrohr 15 an das Abgasrohr 10 angeschlossen, derart, dass eine akustische Kopplung hinsichtlich Luftschall entsteht. Mit anderen Worten, durch das Verbindungsrohr 15 kann im Abgasrohr 10 transportierter Luftschall zum Schalldämpfer 12 gelangen. Ebenso kann von den aktiven Komponenten des Schalldämpfers 12 generierter Gegenschall durch das Verbindungsrohr 15 zum Abgasrohr 10 bzw. in das Abgasrohr 10 gelangen.

Um die thermische Belastung des Schalldämpfers 12 bzw. seiner aktiven und/oder elektrischen Komponenten zu reduzieren, ist das Verbindungsrohr 15 gekühlt. Dabei kommen sowohl eine aktive als auch eine passive Kühlung in Frage. Aktive und passive Kühlmaßnahmen können dabei kumulativ oder alternativ zur Anwendung kommen.

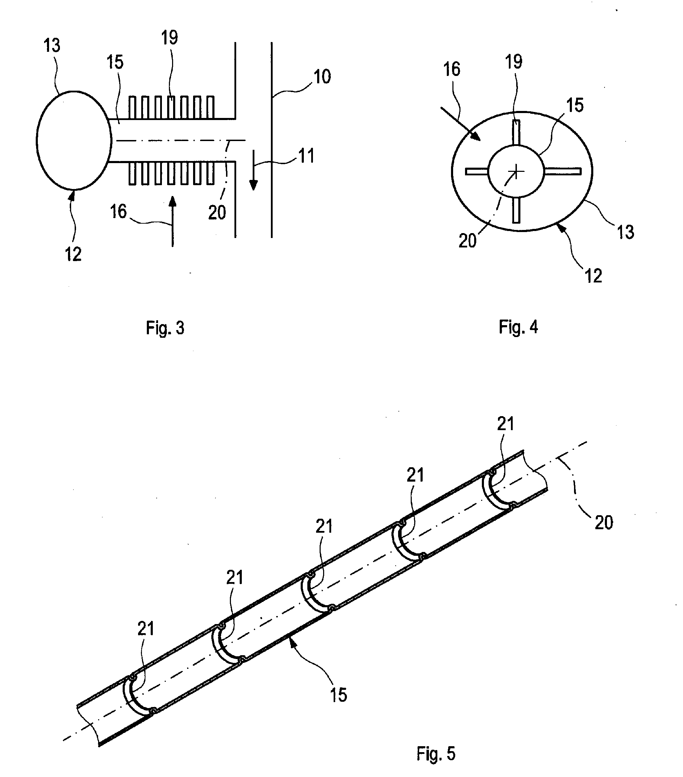

Bspw. kann das Verbindungsrohr 15 am Fahrzeug 1 bzw. im Fahrzeug 1 so angeordnet sein, dass es einer in den Figuren 3 und 4 durch einen Pfeil angedeuteten Luftströmung 16 ausgesetzt ist. Diese Luftströmung 16 kann dabei durch den Fahrbetrieb des Fahrzeugs 1 entstehen, sog. Fahrtwind. Ebenso kann zum Generieren dieser Luftströmung 16 ein Gebläse 17 vorgesehen sein, das in Fig. 1 vereinfacht dargestellt ist. Ein derartiges Gebläse 17 kann im Fahrzeug 1, insbesondere in dessen Motorraum 8, ohnehin vorhanden sein, bspw. um einen hier nicht dargestellten Hauptkühler eines Maschinenkühlkreises 18 mit einer kühlenden Luftströmung zu beaufschlagen. Der Maschinenkühlkreis 18, der hier nur vereinfacht dargestellt ist, dient dabei in üblicher Weise zum Kühlen der Brennkraftmaschine 2. Ebenso kann ein anderes, ohnehin am Fahrzeug 1 vorhandenes Gebläse 17 zur Erzeugung der Luftströmung 16 verwendet werden, um das Verbindungsrohr 15 zu kühlen. Ferner ist denkbar, speziell für das Verbindungsrohr 15 ein eigenes Gebläse 17 im Fahrzeug 1 anzuordnen, das ausschließlich für die Erzeugung der Luftströmung 16 zur Beaufschlagung des Verbindungsrohrs 15 vorgesehen ist. Insofern verfügt das Verbindungsrohr 15 über ein eigenes Gebläse 17.

Besonders zweckmäßig ist dabei eine Weiterbildung, bei welcher auch das Gehäuse 13 des Schalldämpfers 12 im bzw. am Fahrzeug 1 so angeordnet ist, dass auch das Gehäuse 13 der besagten Luftströmung 16 ausgesetzt ist, sodass Verbindungsrohr 15 und Gehäuse 13 gemeinsam mit der kühlenden Luftströmung beaufschlagt sind.

Entsprechend den Figuren 3 und 4 kann das Verbindungsrohr 15 an seiner Außenseite mit Kühlrippen 19 ausgestattet sein. Diese Kühlrippen 19 können sich bzgl. einer Längsachse 20 des Verbindungsrohrs 15 entsprechend Fig. 3 in Umfangsrichtung erstrecken. Die Kühlrippen 19 sind dabei ringförmig ausgestaltet. Ebenso ist es gemäß Fig. 4 denkbar, die Kühlrippen 19 parallel zur Längsachse 20 des Verbindungsrohrs 15 zu orientieren. Sie bilden dann stegförmig abstehende Längsrippen.

Zusätzlich oder alternativ ist es gemäß Fig. 5 zusätzlich oder alternativ zu den an der Außenseite des Verbindungsrohrs 15 angeordneten Kühlrippen 19 möglich, das Verbindungsrohr 15 an seiner Innenseite mit Kühlrippen 21 auszustatten. Im Beispiel sind mehrere, bzgl. der Längsachse 20 ringförmig umlaufende Kühlrippen 21 angedeutet. Diese können bspw. durch Sicken hergestellt werden, die an der Außenseite des Verbindungsrohrs 15 eingebracht werden. Zusätzlich oder alternativ können an der Innenseite des Verbindungsrohrs 15 auch Turbulatoren angeordnet sein, die ebenfalls eine Verbesserung des Wärmeübergangs vom Gasvolumen im Inneren des Verbindungsrohrs 15 und dem Verbindungsrohr 15 realisieren können.

Um die im Fahrbetrieb entstehende Luftströmung gezielt zur Beaufschlagung des Verbindungsrohrs 15 nutzen zu können, kann das Fahrzeug 1, insbesondere im Motorraum 8, entsprechende Luftleitelemente aufweisen. Entsprechendes gilt auch für eine gezielte Strömungsführung für den Fall, dass ein Gebläse 17 zur Erzeugung des Luftstroms 16 verwendet wird.

Entsprechend Fig. 1 kann bei einer besonders vorteilhaften Ausführungsform vorgesehen sein, das Verbindungsrohr 15 mit einem Kühlkreis 22 wärmeübertragend zu koppeln. In diesem Kühlkreis 22 zirkuliert ein Kühlmittel, bei dem es sich insbesondere um ein flüssiges Kühlmittel handelt. Entsprechend dem in Fig. 1 gezeigten, bevorzugten Beispiel kann das Verbindungsrohr 15 zumindest teilweise als Wärmetauscher 23 ausgestaltet sein, der einen durch einen Doppelpfeil angedeuteten Gaspfad 24 und einen Flüssigkeitspfad 25 aufweist und mediengetrennt miteinander wärmeübertragend koppelt. Der Gaspfad 24 verbindet dabei das Gehäuse 13 mit dem Abgasrohr 10, derart, dass über diesen Gaspfad 24 die gewünschte akustische Kopplung erfolgt. Der Flüssigkeitspfad 25 dieses Wärme-übertragers oder Wärmetauschers 23 ist in den genannten Kühlkreis 22 eingebunden. Hierdurch kann eine intensive Kühlung des Verbindungsrohrs 15 realisiert werden. Ferner ergibt sich dadurch quasi eine thermische Entkopplung des Schalldämpfers 12 vom Abgasrohr 10.

Beim Kühlkreis 22, der zur Kühlung des Verbindungsrohrs 15 verwendet wird, kann es sich um einen separat für das Verbindungsrohr 15 im Fahrzeug 1 ausgebildeten Kühlkreis 22 handeln. Hierdurch kann die erforderliche Kühlleistung optimal gewährleistet werden. Zweckmäßig handelt es sich bei diesem Kühlkreis 22 jedoch um einen Zweig oder Abschnitt eines ohnehin im Fahrzeug 1 bereits vorhandenen Kühlkreises. Bspw. kann es sich beim Kühlkreis 22 um einen Zweig oder Abschnitt des Maschinenkühlkreises 18 handeln. Im Beispiel ist in diesen Maschinenkühlkreis 18 die Brennkraftmaschine 2 eingebunden. Bei einer anderen Ausführungsform kann in den Maschinenkühlkreis 18, der mit dem Kühlkreis 22 zum Kühlen des Verbindungsrohrs 15 gekoppelt ist, ein Abgasrückführkühler 26 einer Abgasrückführanlage 27 eingebunden sein. Ebenso kann in besagten Maschinenkühlkreis 18 ein hier nicht gezeigter Ladeluftkühler eingebunden sein, der bei Verwendung einer Ladeeinrichtung die aufgeladene Frischluft kühlt. Ebenso ist es möglich, dass in besagtem Maschinenkühlkreis 18, der mit dem zur Kühlung des Verbindungsrohrs 15 vorgesehen Kühlkreis 22 gekoppelt ist, die Brennkraftmaschine 2 und/oder der Abgasrückführkühler 26 und/oder der Ladeluftkühler und/oder wenigstens ein weiterer fahrzeugseitiger Kühler eingebunden ist bzw. sind.

Besonders zweckmäßig ist auch hier eine Ausgestaltung, bei welcher auch das Gehäuse 13 des Schalldämpfers 12 mit besagtem Kühlkreis 22 wärmeübertragend gekoppelt ist, der für die Kühlung des Verbindungsrohrs 15 vorgesehen ist. Bspw. kann das Gehäuse 13 eine doppelwandige Hülle aufweisen, die in den jeweiligen Kühlkreis 22 eingebunden ist, wodurch das Gehäuse 13 vom jeweiligen Kühlmittel umspülbar bzw. durchströmbar ist.

Entsprechend Fig. 1 ist der Schalldämpfer 12 zusammen mit dem Verbindungsrohr 15 bevorzugt im Motorraum 8 des Fahrzeugs 1 angeordnet. Der aktive Schalldämpfer 12 baut extrem kompakt, wodurch es möglich ist, ihn im Motorraum 8, also nahe an der Brennkraftmaschine 2 unterzubringen. Hierdurch ist es außerdem möglich, die Abgasanlage 3 extrem zu verkürzen. Bspw. kann ein Endrohr 28 der Abgasanlage 3, durch das die Abgasströmung 11 in eine Umgebung des Fahrzeugs 1 austritt, zwischen der Vorderachse 6 und der Hinterachse 7 angeordnet sein, und zwar zweckmäßig an einem hier nicht gezeigten Unterboden des Fahrzeugs 1. Des Weiteren ist es insbesondere möglich, das Endrohr 28 im Motorraum 8 anzuordnen, wodurch die Abgasanlage 3 noch kürzer wird.

Entsprechend Fig. 2 besitzt das Gehäuse 13 eine Schallaustrittsöffnung 29, durch die der vom Lautsprecher erzeugte Gegenschall aus dem Gehäuse 13 austritt. Das Verbindungsrohr 15 ist an diese Schallaustrittsöffnung 29 angeschlossen, um die gewünschte akustische Kopplung zwischen Schalldämpfer 12 und Abgasrohr 10 zu erzielen. Im Beispiel der Fig. 2 ist das Verbindungsrohr 15 über ein Verbindungs- oder Anschlussstück 30 an das Abgasrohr 10 angeschlossen. Dieses Verbindungsstück 30 kann bspw. als T-Stück ausgestaltet sein. Im Beispiel der Fig. 2 ist das Verbindungsstück 30 als Y-Stück ausgestaltet.

Besonders vorteilhaft kann der Schalldämpfer 12 zusammen mit dem Verbindungsrohr 15 als vormontierbare Einheit realisiert werden. Hierdurch wird die Montage der Abgasanlage 3 vereinfacht.

Gemäß Fig. 1 kann der Schalldämpfer 12, insbesondere über sein Gehäuse 13, an einem Getriebeblock 31 eines Getriebes 32 angeschlossen sein, das an die Brennkraftmaschine 2 angebaut ist. Ebenso kann Schalldämpfer 12 an einen Motorblock 33 der Brennkraftmaschine 2 angebaut sein.

## Patentansprüche

1. Abgasanlage für eine Brennkraftmaschine (2), insbesondere eines Kraftfahrzeugs (1),
- mit mindestens einem Abgasrohr (10), das im Betrieb der Brennkraftmaschine (2) einen Abgasstrom (11) von der Brennkraftmaschine (2) wegführt,
- mit mindestens einem aktiven Schalldämpfer (12), dessen Gehäuse (13) über ein Verbindungsrohr (15) an das Abgasrohr (10) akustisch angeschlossen ist,
- wobei das Verbindungsrohr (15) gekühlt ist,
**dadurch gekennzeichnet,**
- **dass** das Verbindungsrohr (15) mit einem Kühlkreis (22) wärmeübertragend gekoppelt ist, in dem ein Kühlmittel zirkuliert,
- **dass** das Verbindungsrohr (15) als Wärmetauscher (23) ausgestaltet ist oder in einen Wärmetauscher (23) integriert ist, der einen Gaspfad (24) mit einem Flüssigkeitspfad (25) wärmeübertragend koppelt und dessen Gaspfad (24) das Gehäuse (13) des Schalldämpfers (12) mit dem Abgasrohr (10) akustisch verbindet und dessen Flüssigkeitspfad (25) in den Kühlkreis (22) eingebunden ist.

2. Abgasanlage nach Anspruch 1,
**dadurch gekennzeichnet,**
**dass** das Verbindungsrohr (15) an seiner Außenseite Kühlrippen (19) aufweist.

3. Abgasanlage nach Anspruch 1 oder 2,
**dadurch gekennzeichnet,**
**dass** das Verbindungsrohr (15) im oder am Fahrzeug (1) so angeordnet ist, dass es einer durch den Fahrbetrieb des Fahrzeugs (1) entstehenden oder einer durch ein am Fahrzeug (1) vorhandenes Gebläse (17) erzeugten Luftströmung (16) ausgesetzt ist.

4. Abgasanlage nach einem der Ansprüche 1 bis 3,
**dadurch gekennzeichnet,**
**dass** dem Verbindungsrohr (15) ein eigenes Gebläse (17) zugeordnet ist, das eine Luftströmung (16) zur Beaufschlagung des Verbindungsrohrs (15) erzeugt.

5. Abgasanlage nach Anspruch 3 oder 4,
**dadurch gekennzeichnet,**
**dass** das Gehäuse (13) des Schalldämpfers (12) im oder am Fahrzeug (1) so angeordnet ist, dass es ebenfalls der zur Beaufschlagung des Verbindungsrohrs (15) vorgesehenen Luftströmung (16) ausgesetzt ist.

6. Abgasanlage nach einem der Ansprüche 1 bis 5,
**dadurch gekennzeichnet,**
**dass** der mit dem Verbindungsrohr (15) gekoppelte Kühlkreis (22) durch einen Zweig oder Abschnitt eines Maschinenkühlkreises (18) gebildet ist, in den die Brennkraftmaschine (2) und/oder ein Abgasrückführkühler (26) und/oder ein Ladeluftkühler eingebunden ist/sind.

7. Abgasanlage nach einem der Ansprüche 1 bis 6,
**dadurch gekennzeichnet,**
**dass** das Gehäuse (13) des Schalldämpfers (12) ebenfalls mit dem zur Kühlung des Verbindungsrohrs (15) vorgesehenen Kühlkreis (22) wärmeübertragend gekoppelt ist.

8. Abgasanlage nach einem der Ansprüche 1 bis 7,
**dadurch gekennzeichnet,**
**dass** das Verbindungsrohr (15) an seiner Innenseite Kühlrippen (21) und/oder Turbulatoren aufweist.

9. Abgasanlage nach einem der Ansprüche 1 bis 8,
**dadurch gekennzeichnet,**
**dass** im Einbauzustand der Abgasanlage (3) der Schalldämpfer (12) und das Verbindungsrohr (15) in einem Motorraum (8) des Fahrzeugs (1) angeordnet sind, in dem auch die Brennkraftmaschine (2) angeordnet ist.

10. Abgasanlage nach einem der Ansprüche 1 bis 9,
**dadurch gekennzeichnet,**
**dass** im Einbauzustand der Abgasanlage (3) ein Endrohr (28) der Abgasanlage (3), durch welches das Abgas in eine Umgebung des Fahrzeugs (1) austritt, in einem Motorraum (3) angeordnet ist, in dem auch die Brennkraftmaschine (2) angeordnet ist.

11. Abgasanlage nach einem der Ansprüche 1 bis 9,
**dadurch gekennzeichnet,**
**dass** im Einbauzustand der Abgasanlage (3) ein Endrohr (28) der Abgasanlage (3), durch welches das Abgas in eine Umgebung des Fahrzeugs (1) austritt, zwischen einer Vorderachse (6) und einer Hinterachse (7) des Fahrzeugs (1) an einem Unterboden des Fahrzeugs (1) angeordnet ist.

12. Abgasanlage nach einem der Ansprüche 9 bis 11,
**dadurch gekennzeichnet,**
**dass** der Motorraum (8) in einem Frontbereich (9) des Fahrzeugs (1) ausgebildet ist.

13. Fahrzeug, insbesondere Personenkraftwagen, mit einer Brennkraftmaschine (2) und einer Abgasanlage (3) nach einem der Ansprüche 1 bis 12.

## Claims

1. Exhaust system for an internal combustion engine (2), in particular of a motor vehicle (1), comprising:
- at least one exhaust pipe (10) which carries an exhaust gas flow (11) away from the internal combustion engine (2) during the operation of the internal combustion engine (2);
- at least one active exhaust muffler (12), the housing (13) of which is acoustically connected to the exhaust pipe (10) via a connection pipe (15);
- the connection pipe (15) being cooled,
**characterised in that**
- the connection pipe (15) is coupled in a heat-transferring manner to a cooling circuit (22), in which coolant circulates,
- the connection pipe (15) is designed as a heat exchanger (23) or is integrated in a heat exchanger (23) which couples, in a heat-transferring manner, a gas path (24) to a liquid path (25), and the gas path (24) of which acoustically connects the housing (13) of the exhaust muffler (12) to the exhaust pipe (10), and the liquid path (25) of which is integrated in the cooling circuit (22).

2. Exhaust system according to claim 1, **characterised in that** the connection pipe (15) comprises cooling fins (19) on the outside thereof.

3. Exhaust system according to either claim 1 or claim 2, **characterised in that** the connection pipe (15) is arranged in or on the vehicle (1) in such a way that it is exposed to an airflow (16) which is produced by the travel of the vehicle (1) or is generated by a blower (17) which is present on the vehicle (1).

4. Exhaust system according to any of claims 1 to 3, **characterised in that** a separate blower (17) is associated with the connection pipe (15) and generates an air flow (16) to act on the connection pipe (15).

5. Exhaust system according to either claim 3 or claim 4, **characterised in that** the housing (13) of the exhaust muffler (12) is arranged in or on the vehicle (1) such that said housing is likewise exposed to the airflow (16) which is provided to act on the connection pipe (15).

6. Exhaust system according to any of claims 1 to 5, **characterised in that** the cooling circuit (22) which is coupled to the connection pipe (15) is formed by a branch or portion of an engine cooling circuit (18) in which the internal combustion engine (2) and/or an exhaust gas recirculation cooler (26) and/or an intercooler is/are integrated.

7. Exhaust system according to any of claims 1 to 6, **characterised in that** the housing (13) of the exhaust muffler (12) is also coupled in a heat-transferring manner to the cooling circuit (22) which is provided for cooling the connection pipe (15).

8. Exhaust system according to any of claims 1 to 7, **characterised in that** the connection pipe (15) comprises cooling fins (21) and/or turbulators on the inside thereof.

9. Exhaust system according to any of claims 1 to 8, **characterised in that** when the exhaust system (3) is assembled, the exhaust muffler (12) and the connection pipe (15) are arranged in an engine compartment (8) of the vehicle (1), in which compartment the internal combustion engine (2) is also arranged.

10. Exhaust system according to any of claims 1 to 9, **characterised in that** when the exhaust system (3) is assembled, a tail pipe (28) of the exhaust system (3), through which pipe the exhaust gas is discharged into the surroundings of the vehicle (1), is arranged in an engine compartment (3) in which the internal combustion engine (2) is also arranged.

11. Exhaust system according to any of claims 1 to 9, **characterised in that** when the exhaust system (3) is assembled, a tail pipe (28) of the exhaust system (3), through which pipe the exhaust gas is discharged into the surroundings of the vehicle (1), is arranged between a front axle (6) and a rear axle (7) of the vehicle (1) on an underbody of the vehicle (1).

12. Exhaust system according to any of claims 9 to 11, **characterised in that** the engine compartment (8) is formed in a front region (9) of the vehicle (1).

13. Vehicle, more particularly a passenger car, comprising an internal combustion engine (2) and an exhaust system (3) according to any of claims 1 to 12.

## Revendications

1. Système d'échappement pour un moteur à combustion interne (2), en particulier un véhicule automobile (1), comprenant :
- au moins un tuyau d'échappement (10) qui évacue un courant de gaz d'échappement (11) du moteur à combustion interne (2) au cours du fonctionnement du moteur à combustion interne (2),
- au moins un silencieux actif (12), dont le corps (13) est raccordé au plan acoustique au tuyau d'échappement (10) via un tuyau de liaison (15),
- dans lequel le tuyau de liaison (15) est refroidi,
**caractérisé en ce que** :
- le tuyau de liaison (15) est couplé pour la transmission de chaleur à un circuit de refroidissement (22) dans lequel circule un agent de refroidissement,
- le tuyau de liaison (15) se présente sous la forme d'un échangeur de chaleur (23) ou est intégré à un échangeur de chaleur (23), qui couple un trajet de gaz (24) à un trajet de liquide (25) pour la transmission de chaleur et dont le trajet de gaz (24) relie le corps (13) du silencieux (12) au tuyau d'échappement (10) au plan acoustique et dont le trajet de liquide (25) est intégré au circuit de refroidissement (22).

2. Système d'échappement selon la revendication 1, **caractérisé en ce que** :
le tuyau de liaison (15) présente des nervures de refroidissement (19) sur sa face externe.

3. Système d'échappement selon la revendication 1 ou la revendication 2,
**caractérisé en ce que** :
le tuyau de liaison (15) est aménagé dans ou sur le véhicule (1) de sorte qu'il soit exposé à un courant d'air (16) se produisant au cours de la marche du véhicule (1) ou produit par une soufflerie (17) installée sur le véhicule (1).

4. Système d'échappement selon l'une quelconque des revendications 1 à 3,
**caractérisé en ce que** :
il est affecté au tuyau de liaison (15) une soufflerie propre (17) qui produit un courant d'air (16) pour alimenter le tuyau de liaison (15).

5. Système d'échappement selon la revendication 3 ou la revendication 4,
**caractérisé en ce que** :
le corps (13) du silencieux (12) est aménagé dans ou sur le véhicule (1) de sorte qu'il soit également exposé au courant d'air (16) prévu pour alimenter le tuyau de liaison (15).

6. Système d'échappement selon l'une quelconque des revendications 1 à 5,
**caractérisé en ce que** :
le circuit de refroidissement (22) couplé au tuyau de liaison (15) est formé par une branche ou une section d'un circuit de refroidissement de moteur (18), à laquelle le moteur à combustion interne (2) et/ou un refroidisseur de recyclage de gaz d'échappement (26) et/ou un refroidisseur d'air de suralimentation est ou sont intégrés.

7. Système d'échappement selon l'une quelconque des revendications 1 à 6,
**caractérisé en ce que** :
le corps (13) du silencieux (12) est également couplé au circuit de refroidissement (22) prévu pour le refroidissement du tuyau de liaison (15) pour la transmission de chaleur.

8. Système d'échappement selon l'une quelconque des revendications 1 à 7,
**caractérisé en ce que** :
le tuyau de liaison (15) présente des nervures de refroidissement (21) et/ou des turbulateurs sur sa face interne.

9. Système d'échappement selon l'une quelconque des revendications 1 à 8,
**caractérisé en ce que** :
à l'état monté du système d'échappement (3), le silencieux (12) et le tuyau de liaison (15) sont aménagés dans un espace moteur (8) du véhicule (1) dans lequel le moteur à combustion interne (2) est également aménagé.

10. Système d'échappement selon l'une quelconque des revendications 1 à 9,
**caractérisé en ce que** :
à l'état monté du système d'échappement (3), un tuyau d'extrémité (28) du système d'échappement (3) par lequel les gaz d'échappement sortent dans un environnement du véhicule (1) est aménagé dans un espace moteur (3) dans lequel est également aménagé le moteur à combustion interne (2).

11. Système d'échappement selon l'une quelconque des revendications 1 à 9,
**caractérisé en ce que** :
à l'état monté du système d'échappement (3) est aménagé un tuyau d'extrémité (28) du système d'échappement (3), par lequel les gaz d'échappement sortent dans un environnement du véhicule (1), entre un essieu avant (6) et un essieu arrière (7) du véhicule (1) sur un dessous de caisse du véhicule (1).

12. Système d'échappement selon l'une quelconque des revendications 9 à 11,
**caractérisé en ce que** :
l'espace moteur (8) est formé dans une zone frontale (9) du véhicule (1).

13. Véhicule, en particulier voiture particulière, comprenant un moteur à combustion interne (2) et un système d'échappement (3) selon l'une quelconque des revendications 1 à 12.
